# EUROPEAN PATENT APPLICATION

(11) **EP 4 166 464 A1**
(43) Date of publication of application: **19.04.2023**
(21) Application number: 21382930.2
(22) Date of filing: 15.10.2021
(51) Int. Cl.: B65B 41/18, B65B 41/12, B65B 57/04, B29C 65/00, B29C 65/78, B65H 23/032, B29C 65/02

(54) **UNWINDING DEVICE FOR A SEALING MACHINE**

(71) Applicant: MULTIVAC Sepp Haggenmüller SE & Co. KG, 87787 Wolfertschwenden (DE)
(72) Inventor: Colomer, Carles, 17300 Blanes (ES)
(74) Representative: Grünecker Patent- und Rechtsanwälte PartG mbB

(57) **Abstract**

An unwinding device (110) for a sealing machine (100), the unwinding device comprising a frame (215), a positioning block (211), movably connected to the frame (215) along a movement direction (D), and an unwinding rod (212), rotatably mounted at the positioning block (211) around a rotational axis (R) that is parallel to the movement direction (D), the unwinding rod (212) for accommodating a sealing material roll (214), wherein the unwinding device (110) further comprises a displacement means (216, 217) that is configured to displace the positioning block (211) relative to the frame (215).

## Description

The present disclosure relates to an unwinding device for a sealing machine according to claim 1 and a sealing machine comprising an unwinding device according to claim 7 as well as a method for controlling the position of a sheetlike sealing material provided on an unwinding device according to claim 8.

### Prior art

Unwinding devices are known in connection with sealing machines for sealing, for example, packages containing products like food.

For example, WO 2019/219967 A1 discloses systems and methods for positioning a lower and/upper material web in a packaging machine. Here, the position of a roll of material provided on an unwinding device can be controlled by moving the rod on which the roll of material is mounted relative to the whole machine.

Moreover, DE 10 2012 001 816 B4 already suggests a tensioning device for tensioning the roll of sealing material while unwinding the sealing material from the roll. Due to the tensioning, misalignments of the sealing material can be prevented. An initial correct positioning of the sealing material role is ensured by using a stop that can be adjusted relative to the unwinding rod on which it is mounted together with the sealing material roll.

From US 4,913,366, discloses adjusting means for adjusting the position of the sealing material roll with respect to the core of the roll and the surface of the roll.

### Object

Starting from the known prior art, it is an object of the present disclosure increase the reliability of positioning a sealing material roll on an unwinding device and reduce negative influences during production caused by misalignment of the sealing material.

### Solution

The above object is addressed with the unwinding device for a sealing machine according to claim 1 and the sealing machine comprising an unwinding device according to claim 7 as well as the method for controlling the position of a sheetlike sealing material.

According to the invention, an unwinding device for a sealing machine is provided, the unwinding device comprising a frame, a positioning block, movably connected to the frame along a movement direction, and an unwinding rod, rotatably mounted at the positioning block around a rotational axis that is parallel to the movement direction, the unwinding rod for accommodating a sealing material roll, wherein the unwinding device further comprises a displacement means that is configured to displace the positioning block relative to the frame.

By realizing movement of the unwinding rod using a separate positioning block that is fixed against rotation, the position of the rotatable unwinding rod can be adjusted accurately also while the unwinding rod moves, thereby providing means for repositioning the unwinding rod also during its use and while unwinding a sealing material roll.

This is particularly advantageous in embodiments where the unwinding rod comprises a further automatic centering device that centers the sealing material roll relative to the unwinding rod. While the centering of the sealing material roll relative to the unwinding rod can be maintained, the invention further allows for changing the relative alignments of the unwinding rod to the frame and optionally to the sealing machine with which the unwinding device may be used.

Thereby, repositioning of the sealing material roll is further rendered more flexible.

In one embodiment, the displacement means comprise a guide that restricts the movement of the positioning block to a movement along the movement direction, wherein the guide is fixedly connected to the frame. A fixed connection of the guide to the frame is to be understood here as meaning that the guide is not movable relative to the frame as long as it is connected to the frame. In some embodiments, the guide may be detachable from the frame, for example by connecting the guide via connecting means like screws to the frame. Thereby, exchange of the guide is possible.

With this, correct alignment of the positioning block and the unwinding rod can be ensured, thereby preventing misalignments relative to the sealing machine when changing the position of the unwinding rod.

In a further embodiment, the displacement means comprises a spindle for moving the positioning block along the movement direction.

A spindle allows for reliable and robust realization of the displacement of the positioning block. This can further reduce the risk of failure of the device and thereby increase the meantime before failure.

In a more particular embodiment, the displacement means further comprises a drive, preferably a stepper motor or servomotor, connected to the spindle for causing movement of the spindle.

Stepper motors or servomotors allow for a reliable and fine-grained displacement, thereby realizing also fine-tuning of the positioning of the unwinding rod. The accuracy of the positioning of the sealing material roll can thereby be improved.

It can further be provided that the unwinding device comprises a control unit or can be connected to a control device for controlling the drive.

Using a control unit realizes automatic control and adjustment of the unwinding device which reduces the necessary interaction with an operator of the sealing machine, thereby also reducing the likelihood for human failures.

In one embodiment, the unwinding device comprises a sensor for measuring a position of a sealing material roll when accommodated on the unwinding rod and wherein the sensor is configured to output a signal indicative of the position of the sealing material roll. The sensor can, for example, comprise or be an optical sensor (like a camera or a light barrier), an acoustic sensor or any other sensor that can measure the position of the sealing material roll, preferably in a contact free manner.

If the sensor is additionally connected with the control unit, a (completely) automatic repositioning of the unwinding rod (for example also during use of the sealing machine) can be realized.

In a further embodiment according to the present disclosure, a sealing machine is provided that comprises a transporter for transporting a product along a transport direction, a forming set for forming a sheetlike sealing material around a product transported through the forming set along the transport direction, and a sealing station downstream of the forming set for sealing the sealing material in a direction substantially parallel to the transport direction, and an unwinding device according to any of the above embodiments for providing a sealing material to the forming set.

With this, the advantages discussed above are realized in machines that wrap the sealing material around a to be sealed product in a way that a fin of the sealing material is formed above the product by means of the forming set. In such cases, accurate positioning of the sealing material roll using the unwinding device according to the present disclosure is particularly advantageous as application of this unwinding device allows for positioning the sealing material so that an accurate fin is formed.

The present disclosure further provides a method for controlling the position of a sheetlike sealing material provided on an unwinding device for a sealing machine, the unwinding device comprising a frame, a positioning block, movably connected to the frame along a movement direction, and an unwinding rod, rotatably mounted at the positioning block around a rotational axis that is parallel to the movement direction, the unwinding rod accommodating the sealing material roll, wherein the unwinding device further comprises a displacement means that is configured to displace the positioning block relative to the frame and wherein the method comprises displacing the sealing material roll by displacing the positioning block.

With this method, also during operation of a sealing machine, reliable displacement of the unwinding rod together with the sealing material roll can be realized, increasing the quality of the sealing of the sheetlike sealing material.

In a further embodiment, the displacement means comprise a guide that restricts the movement of the positioning block to a movement along the movement direction, wherein the guide is fixedly connected to the frame.

Thereby, misalignments are avoided as far as possible.

It can further be provided that the displacement means comprises a spindle that moves the positioning block along the movement direction upon actuation of the displacement means.

This realizes reliable automatic and/or manual displacement of the unwinding rod.

more particularly the displacement means can comprise a drive, preferably a stepper motor or servomotor, connected to the spindle, wherein, upon actuation of the displacement means, the drive causes movement of the spindle.

The module may be manually or automatically actuated or driven and reduces the necessary interaction of the sealing machine with an operator in order to displace the unwinding rod.

In a further embodiment, the unwinding device comprises a control unit or is connected to a control device that controls the drive.

Using a corresponding control device, like a computer acting as central control of the sealing machine can render the displacement of the unwinding rod together with the sealing material roll even more automatic.

In a more specific embodiment, the control device controls the drive automatically and/or in response to a user input.

With this embodiment, a flexible adjustment of the sealing machine is realized.

In one embodiment, the unwinding device further comprises a sensor that measures a position of the sealing material roll accommodated on the unwinding rod and wherein the sensor outputs a signal indicative of the position of the sealing material roll.

When combining the sensor with a control device, the displacement on the unwinding rod can be realized automatically or at least semi-automatically, thereby likewise reducing the required interaction with an operator but also the risk of human failures and/or injuries to an operator when manually actuating the unwinding rod.

More specifically, the control unit or the control device can receive the signal and can automatically control the drive based on the signal.

With this embodiment, a preferably fully automatic displacement of the unwinding rod can be achieved.

### Brief description of the drawings

- Figure 1: Shows a schematic side view of a sealing machine comprising an unwinding device according to embodiments of the present disclosure;
- Figure 2a+2b: Show embodiments of an unwinding device;

### Detailed description

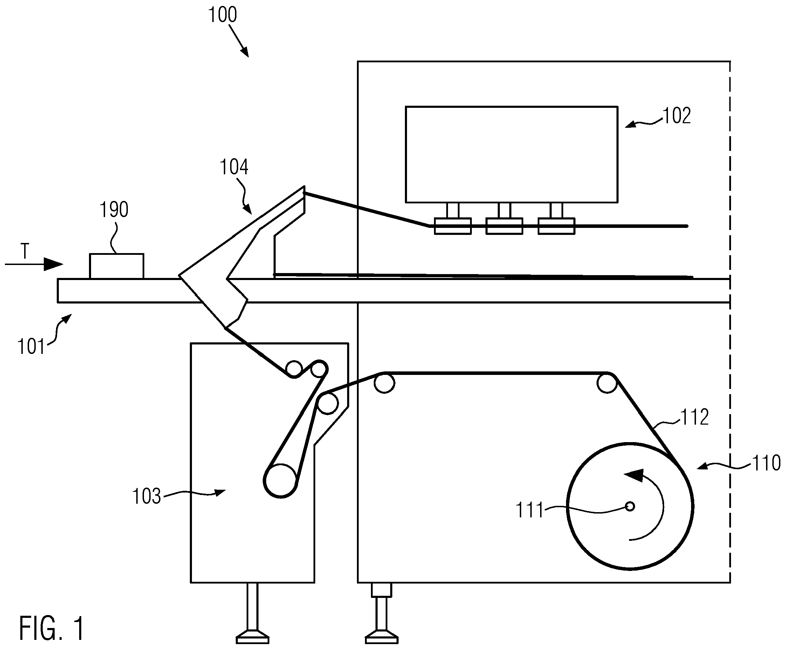

Figure 1 shows a sealing machine 100 in which an unwinding device 110 according to embodiments of the present disclosure may be implemented and used.

Generally, the characteristics of the sealing machine 100 are not limiting to the disclosure. However, the sealing machine may for example be a sealing machine that seals products (or packages) 190 by using a sheetlike material 112 that is wrapped around the product 190 that is transported along a transport direction T on a transporting device 101 (like a chain or transport band or other device). This can be facilitated by forming the sheetlike material (like a plastic foil) around the product 190 using a forming set 104 that folds the sheetlike material so that a fin is created by the edges of the sheetlike material above the product 190.

The thus-folded sealing material together with the product 190 therein can then be transported further along the transport direction T to a sealing station 102 where the fin may be sealed by applying heat so as to melt the plastic material in the region of the fin. This realizes a longitudinal sealing of the sealing material along the transport direction T.

A cross-sealing device or station (not explicitly shown here) may also be part of the sealing station or may be provided downstream of the sealing station 102 and may apply a sealing to the sealing material in a direction substantially transverse to the transport direction T. This cross-sealing device can also be provided upstream of the sealing station 102 applying the longitudinal sealing but downstream of the forming set 104. Alternatively, the cross-sealing device and the sealing station 102 may be integrated as a single sealing station 102 applying both a transverse sealing and a cross sealing, for example at the same time.

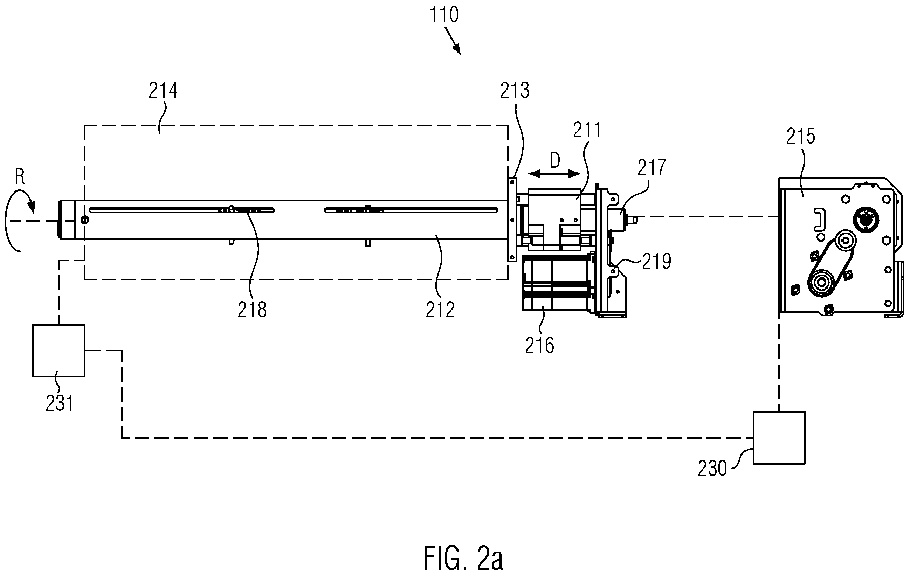

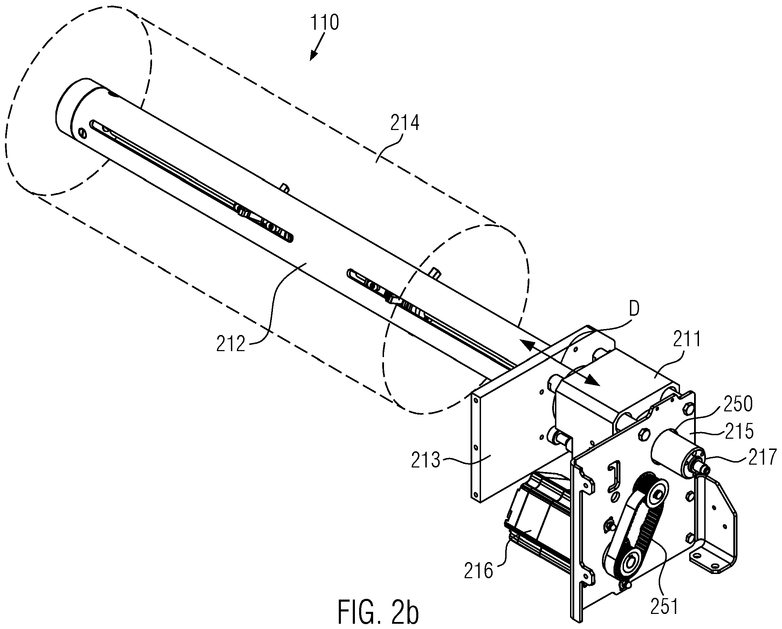

The sheetlike sealing material 112 is provided from the unwinding device 110 which will be described further with reference to figures 2a and 2b. For that purpose, the sheetlike material is provided on a sealing material roll that is provided on an unwinding rod 111. The unwinding rod rotates so as to unwind the sealing material 112 by rotating the sealing material roll in the direction of the indicated arrow. From there, the sealing material may be provisioned to the products 190 by provisioning means 103 not further described here. Generally, these provisioning means 103 may comprise one or more rolls that transport the sheetlike sealing material 112 from the unwinding device 110 to a region where can be provided below the products 190.

The general characteristics of such sealing machines are known. Additionally or alternatively to the embodiments of the sealing machine described above, other sealing machines may be used that wrap the sheetlike material around the products 190 or use the sheetlike sealing material in any other way to seal the products 190 within sealing material.

The products 190 may particularly packages that, for example, accommodate food or other to be packaged and sealed products.

Figures 2a and 2b show more specific embodiments of the unwinding device 110.

Generally, the unwinding device 110 comprises an unwinding rod 212 that is suitable for accommodating a sealing material roll 214. For that purpose, the sealing material roll 214 may have a central opening having an inner diameter that is at least equal to the outer diameter of the unwinding rod 212. With this, the sealing material roll 214 can be pushed over the unwinding rod 212 and securely positioned relative to the same.

For that purpose, additional positioning elements 218 may be provided that extend over the surface of the unwinding rod in a radial direction of the unwinding rod 212. Preferably, these positioning elements 218 allow for getting into physical contact with the sealing material roll and centering the central axis of the opening within the sealing material roll 214 relative to the central axis of the unwinding rod 212.

The unwinding rod may for that purpose be provided as a hollow unwinding rod and may preferably be made or comprise a rigid material like aluminum or steel or stainless steel.

According to embodiments of the present disclosure, the unwinding rod 212 is rotatably mounted on a positioning block 211. Particularly, the unwinding rod 212 may be fixed to the positioning block 211 in a manner that translational movements relative to the positioning block 211 are not possible but the only degree of freedom of the unwinding rod is a single rotational degree of freedom about its rotational axis R that coincides with the central axis of the unwinding rod 212. Thereby, the unwinding rod is fixed against translational movements so as to reduce potential misalignments of the sealing material during use that could come from deviations in the movement of the unwinding rod relative to an intended rotational axis R.

The positioning block 211 is, in turn, movably connected to at least part of the frame 215 of the sealing machine. This part 215 of the frame may likewise be considered as part of the unwinding device 110.

According to embodiments of the present disclosure, the positioning block 211 is fixed to the frame 215 (for example by a guide 219 which may comprise detachable connections to the frame 215) so that the positioning block 211 can only be moved along a direction D that is parallel to the rotational axis R. Preferably, the positioning block is arranged so that it only has a single degree of freedom with respect to a relative movement in the direction D with respect to the frame 215.

Additionally, the unwinding device 110 comprises a displacement means 216 and 217 that are configured to displace the positioning block 211 relative to the frame 215 along the direction D.

The displacement means 216 and 217 may be generally considered as any device that is suitable for displacing the positioning block 211 along the direction D so as to thereby also move the unwinding rod 212 in a direction parallel to and preferably coincident with the rotational axis R.

Thereby, the position of the unwinding rod 212 and correspondingly the positioning of the sealing material roll can be changed in a direction parallel to the rotational axis R so as to account for misalignments of the sealing material roll 214 when unwound from the unwinding rod.

Particularly, such misalignments can occur due to misalignments of the sheetlike material when it is wound to form the sealing material roll. Such misalignments could result in, for example, the fin of the sealing material not being formed by coincident edges of the sealing material above the product. In such cases, the result of the sealing could be unsatisfactory. To control this, the unwinding rod may be adjusted so as to move the sealing material roll provided thereon from the left to the right in the situation shown in figure 2a. Thereby, transversal misalignments of the sealing material with respect to the transport direction T (see figure 1), for example, can be corrected. Preferably, this correction is performed in some embodiments during use of the unwinding device 110, particularly during use of the sealing machine comprising the unwinding device 110.

Preferably, in some embodiments, the displacement means comprise a spindle 217. This spindle may be fixedly mounted to the frame 215 so that it can only move or cause a movement of the positioning block 211 connected thereto in the direction D. Additionally, the displacement means may comprise a motor 216, preferably stepper motor (also referred to as stepping motor) or a servomotor, that is adapted to and connected to the spindle 217 so as to cause movement of the spindle and thereby causing movement of the positioning block which in turn moves the unwinding rod 212. Alternatively or alternatively, instead of using a motor 216, also a manual actuation device may be provided for actuating the spindle 217 so as to move the unwinding rod 212 via movement of the positioning block 211. For example, instead of the motor 216, a handwheel may be provided that allows for manually adjusting the spindle 217.

In some embodiments, it may also be provided that the unwinding rod 212 extends through a stopper 213 or other part of the frame 215 that restricts the movement of the positioning block 211 and/or the positioning of the sealing material roll 214.

Also shown in figure 2s is a control unit 230. This control unit is preferably provided so as to control the displacement means 216 and 217 for adjusting the position of the positioning block 211. This may, for example, encompass controlling the stepper motor or servomotor 216 so as to move the spindle 217 and thereby move the positioning block in the direction D.

The distance over which the positioning block 211 is moved along the direction D may depend, for example, on preset characteristics. For example, if the sealing material roll is changed from a first sealing material roll to a second sealing material roll, information pertaining to the exact extension of the sheetlike sealing material in the direction parallel to the rotational axis R can be used to adjust the position of the unwinding rod to thereby compensate for any deviations in the width of the sealing material. Such information can be provided to the control unit 230 for example via means of an input device, like a touchscreen or a keyboard that can be interacted with by an operator of the sealing machine. Particularly, the control unit 230 may be the central control device or may be part of the central control device of the sealing machine in which the unwinding device 110 is provided.

Additionally or alternatively, a sensor 231 may be provided that is configured to determine a position of the sealing material roll accommodated on the unwinding rod 212 and to output a signal, preferably to the control unit 230, that is indicative of the determined position of the sealing material roll 214. Thereby, the sensor can determine, for example, slight deviations in the positioning of the sealing material roll 214 on the unwinding rod 212 with respect to an intended position that can then be compensated by moving the unwinding rod in a direction parallel to the rotational axis R.

The sensor 231 may, for example, be realized as a light barrier or camera or an acoustic sensor or a tactile sensor that may then output signals that differ depending on the position of the sealing material roll and these signals may be used by the control unit 230 to control the displacement means.

Figure 2b depicts a further view of the unwinding device 110. In this view, like numerals represent like features compared to figure 2a and thus will not be explained in further detail here.

As is seen, in the situation shown in figure 2b, the spindle 217 extends through a receiving opening 250 in the frame 215. In this receiving opening, the spindle may be arranged so as to be freely rotatable and thus also movable in a direction that is parallel to the direction D. When the spindle is actuated for example by means of the servomotor, the spindle moves relative to the frame 215 along the direction D, thereby causing the positioning block 211 to move in this direction as well.

The movement of the positioning block 211 may be restricted on either sides in the direction D. In one direction, it is limited by the frame 215 and in the other direction limited by the plate 213. Thereby, unintentional movement of the unwinding rod 212 can be prevented.

As is shown in figure 2b, the servomotor or stepper motor 216 may, in some embodiments, not be directly connected to the spindle but there may be provided a gear 251 that translates the rotation of the servomotor into movement of the spindle 217. This can be used to adjust the granularity of the movement of the spindle compared to the granularity of the adjustability of the position of the stepper motor or servomotor.

## Claims

1. An unwinding device (110) for a sealing machine (100), the unwinding device comprising a frame (215), a positioning block (211), movably connected to the frame along a movement direction (TD), and an unwinding rod (212), rotatably mounted at the positioning block (211) around a rotational axis (R) that is parallel to the movement direction (D), the unwinding rod (212) for accommodating a sealing material roll (214), wherein the unwinding device (211) further comprises a displacement means (216, 217) that is configured to displace the positioning block (211) relative to the frame (215).

2. The unwinding device (110) according to claim 1, wherein the displacement means (216, 217) comprise a guide (219) that restricts the movement of the positioning block (211) to a movement along the movement direction (D), wherein the guide (219) is fixedly connected to the frame (215).

3. The unwinding device (110) according to claim 1 or 2, wherein the displacement means (216, 217) comprises a spindle (217) for moving the positioning block (211) along the movement direction (D).

4. The unwinding device (110) according to claim 3, wherein the displacement means (216, 217) further comprises a drive (216), preferably a stepper motor or servomotor, connected to the spindle (217) for causing movement of the spindle.

5. The unwinding device (110) according to claim 4, wherein the unwinding device (110) further comprises a control unit (230) or can be connected to a control device for controlling the drive (216).

6. The unwinding device (110) according to any of claims 1 to 5, wherein the unwinding device (110) further comprises a sensor (231) for measuring a position of a sealing material roll (214) when accommodated on the unwinding rod (212) and wherein the sensor is configured to output a signal indicative of the position of the sealing material roll.

7. A sealing machine (100) comprising a transporter (101) for transporting a product (190) along a transport direction (T), a forming set (104) for forming a sheetlike sealing material (112) around a product (190) transported through the forming set (104) along the transport direction (T), and a sealing station (102) downstream of the forming set (104) for sealing the sealing material (112) in a direction substantially parallel to the transport direction (T), and an unwinding device (110) according to any of claims 1 to 6 for providing a sealing material to the forming set (104).

8. A method for controlling the position of a sheetlike sealing material (112) provided on an unwinding device (110) for a sealing machine (100), the unwinding device (110) comprising a frame (215), a positioning block (211), movably connected to the frame along a movement direction (D), and an unwinding rod (212), rotatably mounted at the positioning block (211) around a rotational axis (R) that is parallel to the movement direction (D), the unwinding rod accommodating the sealing material roll (214), wherein the unwinding device (110) further comprises a displacement means (216, 217) that is configured to displace the positioning block (211) relative to the frame (215) and wherein the method comprises displacing the sealing material roll (214) by displacing the positioning block (211).

9. The method according to claim 8, wherein the displacement means (216, 217) comprise a guide (219) that restricts the movement of the positioning block (211) to a movement along the movement direction (D), wherein the guide (219) is fixedly connected to the frame (215).

10. The method according to claim 8 or 9, wherein the displacement means (216, 217) comprises a spindle (217) that moves the positioning block (211) along the movement direction (D) upon actuation of the displacement means (216, 217).

11. The method according to claim 10, wherein the displacement means (216, 217) further comprises a drive (216), preferably a stepper motor or a servomotor, connected to the spindle (217), wherein, upon actuation of the displacement means (216, 217), the drive (216) causes movement of the spindle (217).

12. The method according to claim 11, wherein the unwinding device (110) further comprises a control unit (230) or is connected to a control device that controls the drive (216).

13. The method according to claim 12, wherein the control unit (230) controls the drive automatically and/or in response to a user input.

14. The method according to claim 12 or 13, wherein the unwinding device (110) further comprises a sensor (231) that measures a position of the sealing material roll (214) accommodated on the unwinding rod (212) and wherein the sensor (231) outputs a signal indicative of the position of the sealing material roll (214).

15. The method according to claim 14, wherein the control unit (230) or the control device receives the signal and automatically controls the drive based on the signal.
